# EUROPÄISCHE PATENTSCHRIFT

(11) **EP 1 108 991 B1**
(45) Veröffentlichungstag und Bekanntmachung des Hinweises auf die Patenterteilung: **01.08.2007**
(21) Anmeldenummer: 00123507.6
(22) Anmeldetag: 27.10.2000
(51) Int. Cl.: G01F 23/00

(54) **Füllstandmessgerät und Verfahren zum Betrieb eines solchen Füllstandmessgerätes**
Level indicator and method for operating such an indicator
Détecteur de niveau et procédé de fonctionnement d'un tel détecteur

(30) Priorität: 17.12.1999 DE 19961156
(43) Veröffentlichungstag der Anmeldung: 20.06.2001
(73) Patentinhaber: VEGA Grieshaber KG, 77709 Wolfach (DE)
(72) Erfinder: Auber, Herbert, Dipl.-Ing. (FH), 78713 Schramberg (DE); Mellert, Martin, Dipl.-Ing. (FH), 77790 Steinach (DE); Mosmann, Martin, Dipl.-Ing. (FH), 77709 Wolfach (DE); Oehler, Thomas, Dipl.-Ing. (FH), 77723 Gengenbach (DE)
(74) Vertreter: Patentanwälte Westphal, Mussgnug & Partner

(56) Entgegenhaltungen:
- EP-A- 0 501 900
- EP-A- 0 707 200
- DE-A- 3 639 455
- FR-A- 2 640 747
- FR-A- 2 739 929
- US-A- 5 377 128
- US-A- 5 751 611
- US-A- 5 947 372
- PATENT ABSTRACTS OF JAPAN vol. 2000, no. 06, 22. September 2000 (2000-09-22) & JP 2000 074707 A (OMRON CORP), 14. März 2000 (2000-03-14)

## Beschreibung

Die Erfindung betrifft ein Füllstandmessgerät und ein Verfahren zum Betreiben eines solchen Füllstandmessgerätes.

Zur Füllstandmessung von festem Schüttgut oder von Flüssigkeiten in einem Behälter sind mehrere Messprinzipien bekannt. Als Beispiele wird auf die Füllstandmessung mittels Radar, mittels Schwingstäben, mittels Druck- und mittels Kapazitätsmessung hingewiesen.

Bei diesem bekannten Verfahren ist der Messsensor elektrisch an einen Messwertwandler angeschlossen. Dieser gemeinsame Anschluß am Messwertwandler und am Messsensor wird als Prozeßanschluß bezeichnet, an dem die elektrischen Versorgungsleitungen und die elektrischen Messleitungen des Messwertsensors mit denen des Messwertwandlers verbunden sind.

Es kann am Messsensor zu Spannungsüberschlägen kommen, die Teile des Messsensors oder der elektronischen Auswerteeinrichtung zerstören. Bei Einsatz in explosionsgefährdeten Bereichen sind Vorsichtsmaßnahmen, wie z. B. Mindestabstände der elektrischen Leitungen vorgeschrieben, um einen sicheren Schutz vor Explosionen zu gewährleisten.

Die vom Messsensor erzeugten Messwerte werden an einen Messwertwandler übertragen, der sie z. B. in digitale Daten wandelt und zu einer elektronischen Auswerteeinrichtung sendet. Vor Inbetriebnahme des Füllstandmessgerätes sind kundenspezifische Parametrierdaten in das Füllstandmessgerät einzugeben. Bei Austausch des Messwertwandlers oder der elektronischen Auswerte einrichtung sind diese Parametrierdaten erneut in das Füllstandmessgerät einzugeben, was einen unerwünschten Aufwand darstellt.

Ein Verfahren zum Betrieb eines Füllstandsmessgeräts, bei dem von einem Messsensor aufgenommene Daten digital codiert und zu einer elektronischen Auswerteeinheit geschickt werden, ist z.B. aus der US-A-5 947 372 bekannt.

Es ist Aufgabe der Erfindung, ein Verfahren zum Betrieb eines Füllstandmessgerätes und ein Füllstandsmessgerät möglichst kunden- und wartungsfreundlich zu gestalten.

Die Erfindung löst diese Aufgabe verfahrensmäßig mit den im Anspruch 1 angegebenen Verfahrensschritten dadurch, dass im Messwertwandler ein erster nichtflüchtiger Speicher und in der elektronischen Auswerteeinrichtung ein zweiter nichtflüchtiger Speicher vorgesehen sind und dass in den beiden Speichern dieselben Parametrierdaten redundant gespeichert werden, und dass bei Austausch des Messwertwandlers die im Speicher der elektronischen Auswerteeinrichtung redundant gespeicherten Parametrierdaten automatisch in den Speicher des Messwertwandlers gelesen werden, und/oder dass bei Austausch der elektronischen Auswerteeinrichtung, die im Speicher des Messwertwandlers gespeicherten redundanten Parametrierdaten automatisch in den Speicher der Auswerteeinrichtung gelesen werden, wobei der erste nichtflüchtige Speicher mit einem ersten Mikroprozessor verbunden ist und der zweite nichtflüchtige Speicher mit einem zweiten Mikroprozessor verbunden ist.

Die Erfindung löst diese Aufgabe vorrichtungsmäßig mit den im Anspruch 7 angegebenen Merkmalen.

Das erfindungsgemäße Füllstandmessgerät ist aus einem Messsensor, einem Messwertwandler und einer elektronischen Auswerteeinrichtung aufgebaut. Der Messsensor ist am Messort angeordnet und mißt den Füllstand beispielsweise in einem Behälter oder Tank. Über eine Leitung ist der Messsensor mit einem Messwertwandler verbunden, der meist in der Nähe des Messsensors angeordnet ist. Über eine weitere Leitung ist der Messwertwandler mit einer elektronischen Auswerteeinrichtung verbunden. Der Messsensor sendet die von ihm gemessenen Messwerte an den Messwertwandler, der sie in digitale Daten wandelt und zur elektronischen Auswerteeinrichtung sendet.

Erfindungsgemäß ist im Messwertwandler ein erster nichtflüchtiger Speicher und in der elektronischen Auswerteeinrichtung ein zweiter nichtflüchtiger Speicher vorgesehen. In diesen beiden Speichern werden dieselben Parametrierdaten, die für den Betrieb des Füllstandmessgerätes unbedingt erforderlich sind, redundant gespeichert.

Sowohl nach Austausch des Messwertwandlers als auch der elektronischen Auswerteeinrichtung stehen nach Einsetzen des neuen Gerätes die bereits zuvor gespeicherten redundanten Parametrierdaten wieder in beiden Speichern.

Weil die für die Inbetriebnahme und den Betrieb des erfindungsgemäßen Füllstandmessgerätes erforderlichen Parametrierdaten redundant sowohl im Messwertwandler als auch in der elektronischen Auswerteeinrichtung gespeichert sind, brauchen Sie bei Austausch eines dieser beiden Geräte nicht mehr erneut vom Wartungspersonal eingegeben zu werden. Die Wartung und die Reparatur des erfindungsgemäßen Füllstandsmessgerätes wird dadurch erheblich verkürzt und somit auch verbilligt.

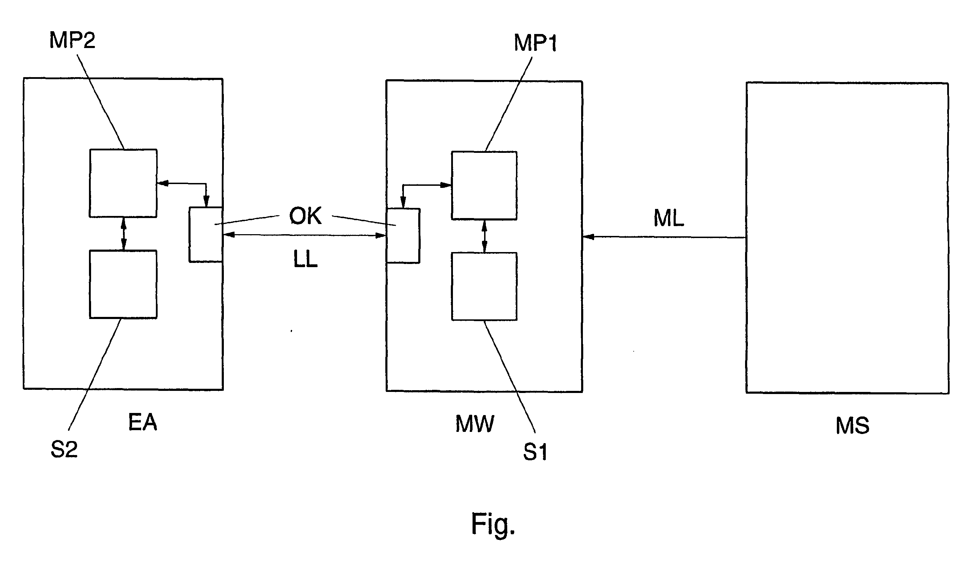

Anhand des in der Figur gezeigten Ausführungsbeispieles eines erfindungsgemäßen Füllstandmessgerätes wird die Erfindung nun näher erläutert.

Bei dem in der Figur gezeigten Füllstandmessgerät ist der Messsensor MS über eine Messleitung ML mit dem Messwertwandler MW verbunden, in welchem ein Mikroprozessor MP1 und ein nichtflüchtiger Speicher S1 vorgesehen sind. Der Messwertwandler MW ist über eine Leitung LL mit der elektronischen Auswerteeinrichtung EA verbunden, in der ebenso wie im Messwertwandler MW ein Mikroprozessor MP2 und ein nichtflüchtiger Speicher S2 vorgesehen sind. Der Mikroprozessor MP1 ist mit dem nichtflüchtigen Speicher S1 verbunden, während der Mikroprozessor MP2 mit dem nichtflüchtigen Speicher S2 verbunden ist. Über die Leitung LL sind die beiden Mikroprozessoren MP1 und MP2 miteinander verbunden.

Bei der Installation und der Erstinbetriebnahme des erfindungsgemäßen Füllstandmeßgerätes werden die kundenspezifischen Parametrierdaten zumindest in einen der beiden nichtflüchtigen Speicher eingegeben. Sie werden dann anschließend automatisch in den anderen nichtflüchtigen Speicher gelesen, können aber auch gleichzeitig in beide nichtflüchtige Speicher gelesen werden.

Wie bereits erwähnt, werden bei Austausch des Meßwertwandlers MW nach Einsetzen des neuen Meßwertwandlers die im nichtflüchtigen Speicher S2 der elektronischen Auswerteeinrichtung EA stehenden Daten automatisch über die Leitung LL in den nichtflüchtigen Speicher S1 des neu eingesetzten Meßwertwandlers MW gelesen. Analog dazu werden bei Austausch der elektronischen Auswerteeinrichtung EA nach Einsetzen der neuen elektronischen Auswerteeinrichtung die im nichtflüchtigen Speicher S1 des Meßwertwandlers MW stehenden Daten automatisch über die Leitung LL in den nichtflüchtigen Speicher S2 der elektronischen Auswerteeinrichtung EA gelesen.

Die Datenübertragung zwischen dem Meßwertwandler MW und der elektronischen Auswerteeinrichtung EA kann z. B. asynchron seriell erfolgen.

Besonders vorteilhaft ist es, den Meßwertwandler MW und die elektronische Auswerteeinrichtung EA galvanisch zu trennen. Als Übertragungsmedium zwischen dem Meßwertwandler MW und der elektronischen Auswerteeinrichtung EA eignet sich z. B. besonders gut eine Lichtleiterfaser LL oder ein elektrischer Leiter, an deren beiden Enden jeweils ein Optokoppler OK vorgesehen ist. Neben der Datenübertragung ist auch die Übertragung der Versorgungsspannung galvanisch entkoppelt.

Durch die galvanische Trennung wird eine Reihe von Vorteilen erzielt, die im Folgenden kurz erläutert werden.

Die Versorgungsleitungen sind vor Überspannungen gegenüber Masse oder Erde besser geschützt, denn vom Prozeßanschluß zum Meßsensor kann kein Spannungsüberschlag mehr auftreten, weil die Elektronik des Meßsensors unmittelbar mit Masse oder mit Erde verbunden ist.

Bevorzugt werden kapazitive Meßsensensoren aus Keramik zur Füllstandmessung eingesetzt, weil sie sich durch eine Reihe unbestreitbarer Vorteile auszeichnen. Jedoch weisen kapazitive Meßsensoren aus Keramik parasitäre Streukapazitäten von der Meßkapazität einerseits und von der Referenzkapazität andererseits auf das Gehäuse auf, die durch kaum vermeidbare Einkopplung von Störungen auf den Leitungen insbesondere im niederfrequenten Bereich einen relativen Meßfehler von bis zu 50% verursachen können. Durch die galvanische Trennung wird dieser Meßfehler in vorteilhafter Weise vollständig eliminiert.

In explosionsgefährdeten Bereichen sind Mindestabstände der Versorgungsleitungen, auf denen Versorgungsströme zwischen 4 und 20 mA fließen, zum Prozeßanschluß vorgeschrieben. Durch die galvanische Trennung kann der Meßsensor jedoch auf einfache Weise in einen Prozeßanschluß aus Metall eingebaut sein. Besonders einfach gestaltet sich der Einbau eines Meßsensors mit einer Membranelektrode, denn wegen der galvanischen Entkopplung kann die Membranelektrode mit dem metallischen Prozeßanschluß elektrisch verbunden werden. Es sind keinerlei zusätzliche Maßnahmen zum Explosionsschutz, wie z. B. Sicherheitsabstände zwischen dem Prozeßanschluß und dem Meßwertwandler, mehr vorzusehen.

Schließlich wird wegen der galvanischen Trennung das Meßergebnis nicht mehr durch gegenseitige Einkopplung zwischen dem Meßwertwandler und der elektronischen Auswerteeinrichtung verfälscht. Das Signal-Rausch-Verhältnis wird durch die galvanische Trennung daher erheblich verbessert.

Die galvanische Trennung kann z. B. wie bereits erwähnt, mittels einer Lichtleiterfaser und zweier Optokoppler oder z.B. mittels eines Übertragers realisiert sein.

Ein erster wesentlicher Vorteil der Erfindung ist darin zu sehen, dass ein Austausch des Meßwertwandlers und der elektronischen Auswerteeinrichtung bei laufender Anlage erfolgen kann. Ein zweiter wesentlicher Vorteil liegt darin, dass nach Austausch des Teiles kein Neuabgleich erforderlich ist, weil die erforderlichen Daten redundant gespeichert sind und automatisch in den leeren Speicher des neu eingesetzten Teiles gelesen werden. Der Zeitaufwand und somit auch die Kosten für Wartungs- und Reparaturmaßnahmen werden daher bei der Erfindung in erheblichem Maße verringert.

### Bezugszeichenliste

- EA: elektronische Auswerteeinrichtung
- ML: Meßleitung
- MP1: Mikroprozessor
- MP2: Mikroprozessor
- MS: Meßsensor
- MW: Meßwertwandler
- LL: Lichtleiterfaser
- OK: Optokoppler
- S1: nichtflüchtiger Speicher
- S2: nichtflüchtiger Speicher

## Patentansprüche

1. Verfahren zum Betrieb eines Füllstandmessgerätes, bei dem ein Messsensor (MS) mit einem Messwertwandler (MW) verbunden ist, der mit einer elektronischen Auswerteeinrichtung (EA) verbunden ist, wobei der Messwertwandler (MW) die vom Messsensor (MS) empfangenen Messwerte in digitale Daten wandelt und zur elektronischen Auswerteeinrichtung (EA) sendet,
**dadurch gekennzeichnet, dass** im Messwertwandler (MW) ein erster nichtflüchtiger Speicher (S1) und in der elektronischen Auswerteeinrichtung (EA) ein zweiter nichtflüchtiger Speicher (S2) vorgesehen sind und dass in den beiden Speichern (S1, S2) dieselben Parametrierdaten redundant gespeichert werden, und dass bei Austausch des Messwertwandlers (MW) die im zweiten nichtflüchtigen Speicher (S2) der elektronischen Auswerteeinrichtung (EA) gespeicherten Daten automatisch in den ersten nichtflüchtigen Speicher (S1) des neu eingesetzten Messwertwandlers (MW) gelesen werden, und/oder dass bei Austausch der elektronischen Auswerteeinrichtung (EA) die im ersten nichtflüchtigen Speicher (S1) des Messwertwandlers (MW) gespeicherten Daten automatisch in den zweiten nichtflüchtigen Speicher (S2) der neu eingesetzten elektronischen Auswerteeinrichtung (EA) gelesen werden, wobei der erste nichtflüchtige Speicher (S1) mit einem ersten Mikroprozessor (MP1) verbunden ist und der zweite nichtflüchtige Speicher (S2) mit einem zweiten Mikroprozessor (MP2) verbunden ist.

2. Verfahren nach Anspruch 1,
**dadurch gekennzeichnet, dass** die Datenübertragung zwischen dem Messwertwandler (MW) und der elektronischen Auswerteeinrichtung (EA) asynchron seriell erfolgt.

3. Verfahren nach Anspruch 1 oder 2,
**dadurch gekennzeichnet, dass** der Messwertwandler (MW) und die elektronische Auswerteeinrichtung (EA) galvanisch getrennt sind.

4. Verfahren nach Anspruch 3,
**dadurch gekennzeichnet, dass** die Datenübertragung und/oder die Übertragung der Versorgungsspannung zwischen dem Messwertwandler (MW) und der elektronischen Auswerteeinrichtung (EA) über eine Lichtleiterfaser (LL) erfolgt, an deren Enden jeweils ein Optokoppler (OK) vorgesehen ist.

5. Verfahren nach Anspruch 3,
**dadurch gekennzeichnet, dass** die Datenübertragung und/oder die Übertragung der Versorgungsspannung zwischen dem Messwertwandler (MW) und der elektronischen Auswerteeinrichtung (EA) mittels eines Übertragers erfolgt.

6. Füllstandsmessgerät, bei dem ein Messsensor (MS) mit einem Messwertwandler (MW) verbunden ist, der mit einer elektronischen Auswerteeinrichtung (EA) verbunden ist,
**dadurch gekennzeichnet, dass** im Messwertwandler (MW) ein erster nichtflüchtiger Speicher (S1) und in der elektronischen Auswerteeinrichtung (EA) ein zweiter nichtflüchtiger Speicher (S2) vorgesehen sind und dass in den beiden Speichern (S1, S2) dieselben Kalibrierdaten redundant gespeichert sind, und dass bei Austausch des Messwertwandlers (MW) die im zweiten nichtflüchtigen Speicher (S2) der elektronischen Auswerteeinrichtung (EA) gespeicherten Daten in den ersten nichtflüchtigen Speicher (S1) des neu eingesetzten Messwertwandlers (MW) übertragen werden, und/oder dass bei Austausch der elektronischen Auswerteeinrichtung (EA) die im ersten nichtflüchtigen Speicher (S1) des Messwertwandlers (MW) gespeicherten Daten in den zweiten nichtflüchtigen Speicher (S2) der neu eingesetzten elektronischen Auswerteeinrichtung (EA) übertragen werden, wobei der erste nichtflüchtige Speicher (S1) mit einem ersten Mikroprozessor (MP1) verbunden ist und der zweite nichtflüchtige Speicher (S2) mit einem zweiten Mikroprozessor (MP2) verbunden ist.

7. Füllstandmessgerät nach Anspruch 6,
**dadurch gekennzeichnet, dass** der Messwertwandler (MW) und die elektronische Auswerteeinrichtung (EA) galvanisch getrennt sind.

8. Füllstandmessgerät nach Anspruch 7,
**dadurch gekennzeichnet, dass** der Messwertwandler (MW) über eine Lichtleiterfaser (LL), an deren Enden jeweils ein Optokoppler (OK) vorgesehen ist, mit der elektronischen Auswerteeinrichtung (EA) verbunden ist.

9. Füllstandmessgerät nach Anspruch 7,
**dadurch gekennzeichnet, dass** der Messwertwandler (MW) über einen Übertrager mit der elektronischen Auswerteeinrichtung (EA) verbunden ist.

## Claims

1. Method for operating a filling level measurement device, in which a measurement sensor (MS) is connected to a measured value converter (MW) which is connected to an electronic evaluation device (EA), wherein the measured value converter (MW) converts the measured values received from the measurement sensor (MS) into digital data and transmits these to the electronic evaluation device (EA), **characterised in that** a first non-volatile memory (S1) is provided in the measured value converter (MW) and a second non-volatile memory (S2) is provided in the electronic evaluation device (EA), and **in that** the same parameterising data are stored redundantly in the two memories (S1, S2), and **in that**, when the measured value converter (MW) is replaced, the data stored in the second non-volatile memory (S2) of the electronic evaluation device (EA) are automatically read into the first non-volatile memory (S1) of the new measured value converter (MW), and/or **in that**, when the electronic evaluation device (EA) is replaced, the data stored in the first non-volatile memory (S1) of the measured value converter (MW) are automatically read into the second non-volatile memory (S2) of the new electronic evaluation device (EA), wherein the first non-volatile memory (S1) is connected to a first microprocessor (MP1) and the second non-volatile memory (S2) is connected to a second microprocessor (MP2).

2. Method according to claim 1, **characterised in that** the data transmission between the measured value converter (MW) and the electronic evaluation device (EA) takes place asynchronously and serially.

3. Method according to claim 1 or 2, **characterised in that** the measured value converter (MW) and the electronic evaluation device (EA) are galvanically separated.

4. Method according to claim 3, **characterised in that** the data transmission and/or the transmission of the supply voltage between the measured value converter (MW) and the electronic evaluation device (EA) takes place via an optical fibre (LL), at the ends of which an optocoupler (OK) is provided in each case.

5. Method according to claim 3, **characterised in that** the data transmission and/or the transmission of the supply voltage between the measured value converter (MW) and the electronic evaluation device (EA) takes place by means of a transmitter.

6. Filling level measurement device, in which a measurement sensor (MS) is connected to a measured value converter (MW) which is connected to an electronic evaluation device (EA), **characterised in that** a first non-volatile memory (S1) is provided in the measured value converter (MW) and a second non-volatile memory (S2) is provided in the electronic evaluation device (EA), and **in that** the same calibrating data are stored redundantly in the two memories (S1, S2), and **in that**, when the measured value converter (MW) is replaced, the data stored in the second non-volatile memory (S2) of the electronic evaluation device (EA) are automatically transmitted into the first non-volatile memory (S1) of the new measured value converter (MW), and/or **in that**, when the electronic evaluation device (EA) is replaced, the data stored in the first non-volatile memory (S1) of the measured value converter (MW) are automatically transmitted into the second non-volatile memory (S2) of the new electronic evaluation device (EA), wherein the first non-volatile memory (S1) is connected to a first microprocessor (MP1) and the second non-volatile memory (S2) is connected to a second microprocessor (MP2).

7. Filling level measurement device according to claim 6, **characterised in that** the measured value converter (MW) and the electronic evaluation device (EA) are galvanically separated.

8. Filling level measurement device according to claim 7, **characterised in that** the measured value converter (MW) is connected to the electronic evaluation device (EA) via an optical fibre (LL), at the ends of which an optocoupler (OK) is provided in each case.

9. Filling level measurement device according to claim 7, **characterised in that** the measured value converter (MW) is connected to the electronic evaluation device (EA) via a transmitter.

## Revendications

1. Procédé de fonctionnement d'un appareil de mesure de niveau selon lequel un capteur de mesure (MS) est relié à un convertisseur de valeur de mesure (MW) lui-même relié à une installation d'exploitation électronique (EA), le convertisseur de valeurs de mesure (MW) transformant les valeurs de mesure fournies par le capteur de mesure (MS) en données numériques pour les envoyer à l'installation d'exploitation électronique (EA),
**caractérisé en ce que**
le convertisseur de valeurs de mesure (MW) comporte une première mémoire non volatile (S1) et l'installation d'exploitation électronique (EA) comporte une seconde mémoire non volatile (S2) ; et
les mêmes données paramétriques sont enregistrées de façon redondante dans les deux mémoires (S1, S2) ; et
lors du remplacement du convertisseur de valeurs numériques (MW) on enregistre automatiquement les données mémorisées dans la seconde mémoire non volatile (S2) de l'installation d'exploitation électronique (EA), dans la première mémoire non volatile (S1) du nouveau convertisseur de valeurs de mesure (MW) mis en oeuvre ; et/ou
lors du remplacement de l'installation d'exploitation électronique (EA) on enregistre automatiquement les données mémorisées dans la première mémoire non volatile (S1) du convertisseur de valeurs de mesure (MW) dans la seconde mémoire non volatile (S2) de l'installation d'exploitation électronique (EA) nouvellement mise en place ;
la première mémoire non volatile (S1) étant reliée au premier microprocesseur (MP1) et la seconde mémoire non volatile (S2) étant reliée à un second microprocesseur (MP2).

2. Procédé selon la revendication 1,
**caractérisé en ce que**
la transmission des données entre le convertisseur de valeurs de mesure (MW) et de l'installation d'exploitation électronique (EA) se fait de manière asynchrone série.

3. Procédé selon la revendication 1 ou 2,
**caractérisé en ce que**
le convertisseur de valeurs de mesure (MW) et l'installation d'exploitation électronique (EA) sont séparés galvaniquement.

4. Procédé selon la revendication 3,
**caractérisé en ce que**
la transmission des données et/ou la transmission de la tension d'alimentation entre le convertisseur de valeurs de mesure (MW) et l'installation d'exploitation électronique (EA) se fait par une fibre optique (LL) dont les extrémités sont équipées d'un coupleur optique (OK).

5. Procédé selon la revendication 3,
**caractérisé en ce que**
la transmission des données et/ou la transmission de la tension d'alimentation entre le convertisseur de valeurs de mesure (MW) et l'installation d'exploitation électronique (EA) se fait par l'intermédiaire d'un organe de transmission.

6. Appareil de mesure de niveau dont un capteur de mesure (MS) est relié à un convertisseur de valeurs de mesure (MW) lui-même relié à une installation d'exploitation électronique (EA),
**caractérisé en ce que**
le convertisseur de valeurs de mesure (MW) comporte une première mémoire non volatile (S1) et l'installation d'exploitation électronique (EA) comporte une seconde mémoire non volatile (S2) ; et
les deux mémoires (S1, S2) contiennent l'enregistrement redondant des données de calibrage ; et
lorsqu'on remplace le convertisseur de valeurs de mesure (MW) on transmet les données enregistrées dans la seconde mémoire non volatile (S2) de l'installation d'exploitation électronique (EA) dans la première mémoire non volatile (S1) du nouveau convertisseur de valeurs de mesure (MW) et/ou lorsqu'on remplace l'installation d'exploitation électronique (EA) on transmet les données enregistrées par la première mémoire non volatile (S1) du convertisseur de valeurs de mesure (MW) vers la seconde mémoire non volatile (S2) de la nouvelle installation d'exploitation électronique (EA) ;
la première mémoire non volatile (S1) étant reliée à un premier microprocesseur (MP1) et la seconde mémoire non volatile (S2) étant reliée à un second microprocesseur (MP2).

7. Appareil de mesure de niveau selon la revendication 6,
**caractérisé en ce que**
le convertisseur de valeurs de mesure (MW) et l'installation d'exploitation électronique (EA) sont séparés galvaniquement.

8. Appareil de mesure de niveau selon la revendication 7,
**caractérisé en ce que**
le convertisseur de valeurs de mesure (MW) est relié par une fibre optique (LL) dont les extrémités sont munies chacune d'un coupleur optique (OK), à l'installation d'exploitation électronique (EA).

9. Appareil de mesure de niveau selon la revendication 7,
**caractérisé en ce que**
le convertisseur de valeurs de mesure (MW) est relié par un transformateur à l'installation d'exploitation électronique (EA).
